**Europäisches Patentamt**

**European Patent Office**

**Office européen des brevets**

(19)

(11) Veröffentlichungsnummer: **0 159 512**
**B1**

(12) **EUROPÄISCHE PATENTSCHRIFT**

(45) Veröffentlichungstag der Patentschrift:
**31.05.89**

(21) Anmeldenummer: **85102771.4**

(22) Anmeldetag: **12.03.85**

(51) Int. Cl.⁴: **B 60 C 9/04,** B 60 C 9/06,
B 60 C 9/12

(54) **Fahrzeugluftreifen.**

(30) Priorität: **24.04.84 DE 3415280**

(43) Veröffentlichungstag der Anmeldung:
**30.10.85 Patentblatt 85/44**

(45) Bekanntmachung des Hinweises auf die Patenterteilung:
**31.05.89 Patentblatt 89/22**

(84) Benannte Vertragsstaaten:
**AT BE CH DE FR GB IT LI LU NL SE**

(56) Entgegenhaltungen:
**DE-A-1 909 668**
**DE-B-1 237 455**
**DE-B-1 505 028**

(73) Patentinhaber: **Continental Aktiengesellschaft,
Königsworther Platz 1, D-3000 Hannover 1 (DE)**

(72) Erfinder: **Mahling, Rolf, Dipl.- Chem., Leipziger
Strasse 18, D-3540 Korbach (DE)**
Erfinder: **Klapp, Wolfgang, Dipl.- Ing., Wilh.-
Rüdiger Strasse 21, D-3540 Korbach (DE)**

## Beschreibung

Die Erfindung betrifft einen Fahrzeugluftreifen gemäß dem Oberbegriff von Patentanspruch 1.

Es hat sich gezeigt, daß bei Luftreifen für Fahrzeugräder mit hoher Belastung, z. B. bei den sogenannten Industriereifen, die bei Gabelstaplern, Mobilkränen, Industrieschleppern und anderen Industriefahrzeugen zum Einsatz kommen, manchmal schon nach einiger Zeit hoher Dauerbelastung im Schulterbereich zwischen dem Gewebegummi der Karkasse und dem Laufstreifen eine Blasenbildung auftritt, die zu einer vorzeitigen Zerstörung dieses Bereichs führen kann, während die übrigen Teile des Reifens noch völlig intakt sind.

Aus der DE-A-1 909 668 ist ein gattungsgemäßer Fahrzeugluftreifen für Personenwagen, Lastkraftwagen oder Geländefahrzeuge bekannt, bei dem zusätzlich zur Reifenkarkasse Fasern ohne Verwendung eines chemischen Haftsystems im Gummi eingebettet sind. Dabei wirken die kurzen Fasern gegenüber dem benachbarten Gummi gleichsam als Fremdkörper, die vor allen an Stellen dynamischer Beanspruchung eine "Sägewirkung" erzeugen können, so daß z. B. im Schulterbereich häufig vorzeitige Schädigungen auftreten.

Der Erfindung liegt deshalb die Aufgabe zugrunde, die Haltbarkeit eines Reifens der eingangs beschriebenen Art vor allem im Schulterbereich entscheidend zu verbessern.

Diese Aufgabe wird erfindungsgemäß durch die kennzeichnenden Merkmale des Patentanspruchs 1 gelöst.

Ausführliche Versuche auf dem Prüfstand haben ergeben, daß erfindungsgemäße Reifen gegenüber herkömmlichen gleicher Bauweise sich durch eine zwei - bis dreifache Lebensdauer (= Kilometerleistung bei voller Belastung) auszeichnen. Diese erhebliche Verbesserung der Reifen wird mit überraschend einfachen Mitteln erzielt. Der Kautschukmischung für die Gewebegummierung wird lediglich ein bestimmter Anteil kurzer Fasern zugegeben, die sehr billig aus Abfällen (Reste bei der Reifencordherstellung bzw. -verarbeitung) hergestellt werden können, und ein Haftsystem zur chemischen Bindung der Fasern am Kautschuk im Wege der Vulkanisation beigefügt. Eine vorteilhafte Richtungsorientierung der eingemischten Fasern erhält man automatisch durch Kalandrieren der Kautschukmischung für das Karkaßgewebe, weil dabei die einzelnen Faserteilchen sich bevorzugt in Walzenumfangsrichtung legen.

Vorteilhafte Ausgestaltungen der Erfindung sind den Unteransprüchen zu entnehmen.

Nachfolgend wird ein Ausführungsbeispiel der Erfindung anhand einer Zeichnung näher erläutert. Es zeigt

Fig. 1    einen Fahrzeugluftreifen für Industriefahrzeuge in einem radialen Teilschnitt,

Fig. 2    einen senkrechten Teilschnitt durch den Reifen der Fig. 1 in Diagonalrichtung.

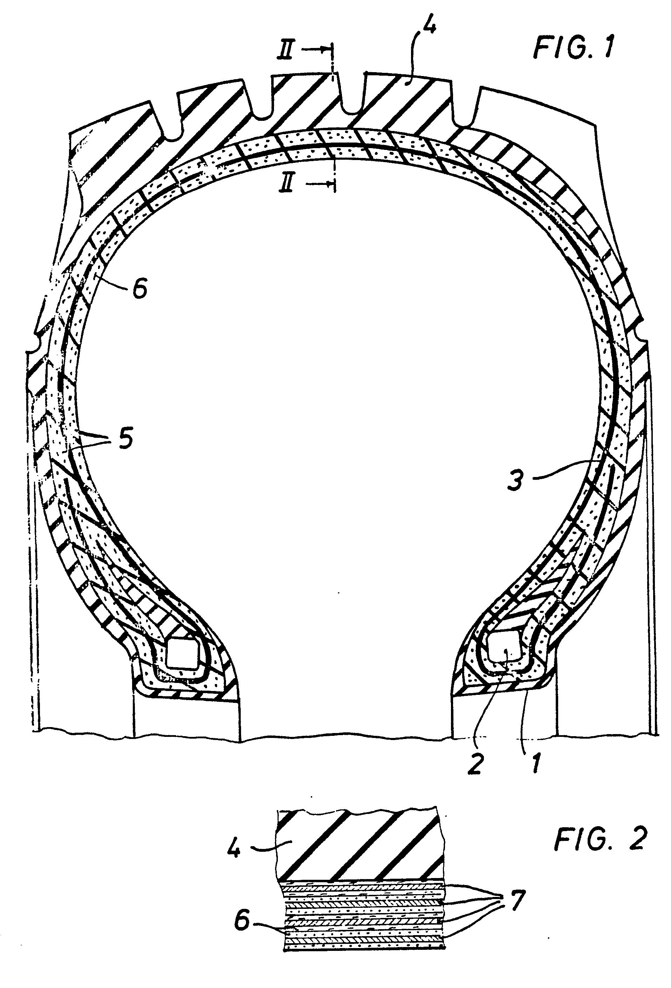

Der Reifen nach Fig. 1, der aus Gummi oder gummiähnlichen Kunststoffen aufgebaut ist, weist in den Wülsten 1 zugfeste Wulstkerne 2 auf, in denen eine mehrlagige Diagonalkarkasse 3 verankert ist. Radial außen befindet sich ein Laufstreifen 4 aus einem abriebfesten Gummi, der bis zu den Reifenschultern reicht.

Der die Karkasse 3 umgebende Gewebegummi 5 ist mit kurzen Fasern 6 von ca. 1 bis 5 mm Länge durchsetzt, die überwiegend ausgerichtet im Gummi 5 eingelagert sind und die mittels eines Haftsystems chemisch, d. h. festhaftend am umgebenden Gummi 5 gebunden sind. Es werden textile Fasern 6 z. B. aus Reyon und/oder Nylon bevorzugt, doch können bei Bedarf auch metallische Fasern 6 zum Einsatz kommen. Das Verhältnis von Faserlänge zu -durchmesser sollte mindestens 20 betragen.

Das Faser-Gummi-Gemisch wird, wie auch eine übliche Gewebegummierung, bei der Herstellung am besten auf einem Kalander verarbeitet, wobei sich automatisch eine Ausrichtung der Fasern ergibt, und es werden schließlich die Lagen des Karkaßgewebes mit den so vorgefertigten Kalanderplatten aus dem Faser-Kautschuk-Gemisch versehen.

Der Faseranteil des Faser-Gummi-Gemischs kann bevorzugt 15 bis 35 Vol. % betragen, und die Fasern 6 sind mittels eines Haftungssystems z. B. aus Resorcin und Hexamethylentetramin eingebettet. Eine bevorzugte Mischung für das Faser-Gummi-Gemisch setzt sich folgendermaßen zusammen:

| | | |
|---|---|---|
| Naturkautschuk | 45Vol.% | |
| Fasern | 25" | " |
| Ruß | 15" | " |
| Mineralöl | 6" | " |
| Verarbeitungshilfe | 2" | " |
| Stearinsäure | 1" | " |
| Zinkweiß | 1" | " |
| Resorcin | 1" | " |
| Alterungsschutzmittel | 1" | " |
| Beschleuniger (incl. Hexamethylentetramin) | 2" | " |
| Schwefel | 1" | " |

100 Vol. %

Die Mischung für das Faser-Gummi-Gemisch sollte eine Härte von ca. 70 bis 80 Shore A aufweisen, so daß das Gemisch 5 eine hohe Versteifung der Karkasse 3 bewirkt.

Die Karkasse 3 gängiger Industriereifen ist z. B. vierlagig ausgebildet, doch können selbstverständlich auch Karkassen 3 mit einer anderen Lagenzahl eingesetzt werden. Wichtig ist, daß die Gewebegummierung für jede Lage aus einem Faser-Gummi-Gemisch besteht.

Fig. 2 zeigt einen senkrechten Schnitt durch einen Teil des Reifens der Fig. 1 in einer Diagonalrichtung (ca. 50° zur Reifenumfangsrichtung geneigt). Es ist eine vierlagige Diagonalkarkasse dargestellt, bei der jede Textillage 7 beidseitig mit einem vorstehend beschriebenen Faser-Gummi-Gemisch versehen ist. Bei der gewählten Schnittrichtung erscheinen die Fasern 6 in der Gewebegummierung von zwei Lagen 7 überwiegend in Längsrichtung, während sie in den beiden anderen Lagen überwiegend im Querschnitt zu sehen sind.

Die Erfindung erfaßt selbstverständlich auch Ausführungsarten, bei denen zwischen Karkasse 3 und Laufstreifen 4 zusätzliche Füllstreifen aus einem Faser-Gummi-Gemisch angeordnet sind bzw. bei denen solche Füllstreifen das Faser-Gummi-Gemisch der Gewebegummierung ersetzen. Weiterhin kann das Faser-Gummi-Gemisch asymmetrisch auf einer Gewebelage aufgebracht sein, d. h. daß die beiden Seiten des Gewebes unterschiedlich dick bedeckt sind. Es können auch Gewebelagen zum Einsatz kommen, die einseitig mit einem Faser-Gummi-Gemisch versehen sind.

**Patentansprüche**

1. Fahrzeugluftreifen, insbesondere für Industriefahrzeuge, mit einer Karkasse in Diagonalbauweise mit mehreren Gewebelagen, die in den Wülsten durch Umschlingen von zugfesten Wulstkernen verankert ist, und mit einem Laufstreifen, wobei die Gewebegummierung der Karkasse (3) und/oder separate Gummistreifen zumindest im Schulterbereich des Reifens aus einem Faser-Gummi-Gemisch bestehen, das eine Härte von ca. 70 bis 80 Shore A aufweist, dadurch gekennzeichnet, daß das Faser-Gummi-Gemisch einen Faseranteil von 15 bis 35 Vol.-% aufweist, und daß die Fasern (6) mit Hilfe eines Haftsystems chemisch in dem Gummi (5) eingebunden sind.

2. Fahrzeugluftreifen nach Anspruch 1, gekennzeichnet durch Fasern (6) von 1 bis 5 mm Länge, die überwiegend richtungsorientiert im Faser-Gummi-Gemisch eingelagert sind.

3. Fahrzeugluftreifen nach Anspruch 1, gekennzeichnet durch Fasern (6) mit einem Verhältnis Länge : Durchmesser von mindestens 20.

**Claims**

1. Pneumatic vehicle tyre, more especially for industrial vehicles, having a carcase of an angular construction with a plurality of fabric plies, which carcase is secured in the beads by being looped around substantially inextensible bead cores, and having a tread strip, wherein the fabric rubber coating of the carcase (3) and/or separate rubber strips, at least in the shoulder region of the tyre, are formed from a mixture of fibre and rubber, which mixture has a hardness of approx. 70 to 80 Shore A, characterised in that the mixture of fibre and rubber has a fibre content of 15 ta 35 % by vol., and in that the fibres (6) are chemically bonded in the rubber (5) by means of an adhesive system.

2. Pneumatic vehicle tyre according to claim 1, characterised by fibres (6) with a length of 1 to 5 mm, which fibres are embedded in the mixture of fibre and rubber in a predominantly directionally orientated manner.

3. Pneumatic vehicle tyre according to claim 1, characterised by fibres (6) having a ratio of length : diameter of at least 20.

**Revendications**

1. Pneumatique pour véhicules, notamment pour véhicules industriels, comprenant une carcasse du type carcasse diagonale comportant plusieurs couches de tissu, qui est ancrée dans les talons en étant enroulée autour de tringles résistantes à la traction, que comportent les talons, et une bande de roulement, le gommage du tissu de la carcasse (3) et/ou des bandes séparées de caoutchouc étant constitués, au moins dans la zone des épaulements du pneumatique, par un mélange de fibres et de caoutchouc, qui possède une dureté Shore A comprise entre environ 70 et 80, caractérisé en ce que le mélange fibres-caoutchouc contient un pourcentage de fibres compris entre 15 et 35 % en volume, et que les fibres (6) sont liées chimiquement dans le caoutchouc (5) à l'aide d'un système adhésif.

2. Pneumatique pour véhicules selon la revendication 1, caractérisé par des fibres (6) possédant une longueur comprise entre 1 et 5 mm et qui sont insérées dans le mélange fibres-caoutchouc en étant dans une large mesure orientées.

3. Pneumatique pour véhicules selon la revendication 1, caractérisé par des fibres (6), dans lesquelles le rapport longueur : diamètre est égal au moins à 20.

FIG. 1

FIG. 2